(19) Europäisches Patentamt / European Patent Office / Office européen des brevets

(11) **EP 4 158 625 B1**

(12) **EUROPEAN PATENT SPECIFICATION**

(45) Date of publication and mention
of the grant of the patent:
**23.04.2025   Bulletin 2025/17**

(21) Application number: **20733686.8**

(22) Date of filing: **29.05.2020**

(51) International Patent Classification (IPC):
**G10L 25/51** *(2013.01)*      **G10L 25/78** *(2013.01)*
**G10L 17/06** *(2013.01)*      **G10L 21/0216** *(2013.01)*
**H04R 25/00** *(2006.01)*

(52) Cooperative Patent Classification (CPC):
**G10L 25/78; G10L 25/51; H04R 1/1083;**
G10L 17/06; G10L 2021/02166; H04R 1/1016;
H04R 1/1041; H04R 3/005; H04R 25/407

(86) International application number:
**PCT/EP2020/065014**

(87) International publication number:
**WO 2021/239254 (02.12.2021 Gazette 2021/48)**

(54) **A OWN VOICE DETECTOR OF A HEARING DEVICE**

DETEKTION DER EIGENEN SPRACHAKTIVITÄT IN EINEM HÖRGERÄT/KOPFHÖRER UND VERFAHREN HIERZU

DETECTION DE L'ACTIVITE DE LA PROPRE VOIX D'UN UTILISATEUR D'UN DISPOSITIF D'ÉCOUTE ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.04.2023   Bulletin 2023/14**

(73) Proprietor: **Huawei Technologies Co., Ltd.**
**Longgang District,**
**Shenzhen,**
**Guangdong 518129 (CN)**

(72) Inventor: **NIEMISTÖ, Riitta**
**16440 Kista (SE)**

(74) Representative: **Roth, Sebastian**
**Mitscherlich PartmbB**
**Patent- und Rechtsanwälte**
**Karlstraße 7**
**80333 München (DE)**

(56) References cited:
US-A1- 2014 093 091      US-A1- 2017 263 267
US-A1- 2019 272 842

**Description**

TECHNICAL FIELD

The present disclosure relates to the field of hearables. In particular, the disclosure relates to a voice detector for a hearing device, and to a method for voice detection. Further, the disclosure also relates to the hearing device itself, and to a hearing system comprising multiple such hearing devices.

BACKGROUND

Wireless earphones or other hearables are meanwhile widely used as mobile accessory to electronic devices. Hearables are traditionally used for listening to music (playback). When there is a microphone in a hearable, it can also be used for telephony, e.g., in cooperation with the electronic device. Recently, there has also been an increasing interest in using hearables for listening also the environment.

Hearables can comprise one or more microphones arranged outside the ears of a user, when the hearable is used, in addition to a loudspeaker arranged inside the ear of the user. The hearables themselves are typically plugged into the ears of the user when used. Natural hearthrough is often desired, and reproduces an outside signal so that the user hears the environment similarly as if she or he was not wearing hearables at all. In this context, augmented hearing in hearables comprises a set of audio signal processing methods that are used for improving hearing for intelligibility or pleasure.

Moreover, for hearing-impaired users, augmented hearing means using hearables similarly as hearing aids. However, anyone can benefit from augmented hearing, because it offers a possibility to control outside voice levels. For example, if one person is speaking too loudly to another person, the other person can adjust the person's voice to a tolerable level. Correspondingly, if someone is talking very quietly, hearables can be used to boost the voice of that person.

However, a problem at hand is that a simple boost, i.e., boost everything, would boost also the own voice of the user and the background noise. Especially, the own voice of the user may, thus, become too loud.

In particular, the simple boost applies a gain to a microphone signal (possibly modified by natural hearthrough) and plays the resulting modified microphone signal on the loudspeaker of the hearables. Typically, this boost amplifies also the low level background noise, which could subsequently be reduced by using a noise suppressor. However, also the own voice of the user is amplified, or in case of negative gain, reduced.

More sophisticated methods that involve own voice detection of the user have been studied for hearing aids. For instance, one method uses two microphones and the detection of the own voice of the user is done by means of an adaptive filter between two microphone signals. Another method assumes that a sensor is implanted into the head of the user. The detection is then based on comparing signal strengths.

However, the first method requires two microphones and is not applicable with affordable devices having one microphone only. In the second method, the detection does not consider features typical of the speech and can be affected, e.g., by chewing.

US 2014/0093091 A1 and US 2017/0263267 A1 disclose methods an apparatuses for detecting a user's voice using an accelerometer, and an improved robustness can be achieved in detecting a user speech when combining the voice activity decision of microphone signals with the voice activity decision of an accelerometer signal.

Thus, there is a need for improved own voice detection for a hearing device.

SUMMARY

In view of the above-mentioned problems and disadvantages, the present disclosure aims to improve voice detection in hearing devices, e.g., hearables. An object is thereby to provide a voice detector for a hearing device that can reliably and in an easy manner detect a voice, in particular an own voice of a user of the hearing device. In particular, the improved voice detector should overcome the above mentioned disadvantages.

The object is achieved by the solution provided by the embodiments in the enclosed independent claims. Advantageous implementations of the embodiments are further defined in the dependent claims.

According to a first aspect, the disclosure relates to a voice detector for a hearing device, the voice detector being configured to obtain one or more microphone signals, obtain a voice accelerometer, VAC, signal, identify the presence of a pitch in the VAC signal with a sensitivity by using a signal power of the one or more microphone signals, and, if the presence of a pitch with the sensitivity is identified in the VAC signal, determine whether the pitch is associated with a user own voice signal.

The voice accelerometer can, for example, be a tree-axis Micro-Electro-Mechanical Systems, MEMS, accelerometer with low-noise, high-bandwidth and Time-Division Multiplexing (TDM). Due to its high bandwidth, it is particularly suitable for hearables or smart headphones, where it can significantly improve the audio quality, especially in systems using MEMS microphones. The hearing device can be a headset. The VAC signal may be a signal that corresponds to vibrations caused by a propagation of waves through the human body when a user of the hearing device speaks. A VAC may be used to pick up such vibrations and convert them into the VAC signal. Each of the microphone signals is a signal that corresponds to acoustic waves propagating in the air, picked up by one or more microphones, and converted into the microphone signals. The VAC may be immune to such acoustic waves propagating the air, and may, thus, be specifically configured to detect the own voice of the user inside the ear.

The voice detector of the first aspect provides the advantage that the own voice of the user can be detected reliably and in an easy manner. Moreover, it provides the advantage that environmental sounds may be amplified or reduced, while the own voice of the user may be kept in its original level (or at least close). Furthermore, the voice detector also provides the advantage that it can be configured to adapt the voice volume of the user to how she hears her own voice, and to the environment voice volume, respectively.

In an implementation form of the voice detector according to the first aspect, the voice detector is configured to determine a first VAC threshold based on the one or more microphone signals, and identify the presence of the pitch in the VAC signal based on the first VAC threshold.

The pitch may be computed in a lowered sampling rate (e.g., 2 kHz), and only when the signal strength of the VAC signal is high enough (first VAC threshold), in order to have moderate complexity.

Moreover, this implementation provides the advantage that the pitch can be detected in a simple and reliable way.

In a further implementation form of the voice detector according to the first aspect, the voice detector is further configured to determine whether the pitch is associated with the voice signal based on a determined second VAC threshold.

This provides the advantage that the pitch can be detected in a simple and reliable way, and thus also an associated voice.

In a further implementation form of the voice detector according to the first aspect, the voice detector is further configured to determine that the pitch is associated with the voice signal, if additionally a frequency of the pitch is within a predefined frequency range.

This provides the advantage that the pitch can be detected in a simple and reliable way, simply depending on the predefined frequency range.

In a further implementation form of the voice detector according to the first aspect, the first VAC threshold is determined based on comparing a signal power of a current frame of the one or more microphone signals with an average signal power of multiple frames of the one or more microphone signals.

Thereby, a current frame of each microphone signal may be compared with the average over multiple frames of the same microphone signal. Alternatively, and average over the current frames of multiple microphone signals may be compared with an average over the average of multiple frames of multiple microphone signals.

In a further implementation form of the voice detector according to the first aspect, the first VAC threshold has a higher value, if the signal power of the current frame of the microphone signal is higher than the average signal power of the one or more microphone signals; and/or the first VAC threshold has a lower value, if the signal power of the current frame of the one or more microphone signals is equal to or lower than the average signal power of the one or more microphone signals.

That is, if there is sufficient signal present in the one or more microphones, the threshold for the pitch detection is lower, and when there is no signal present in the one or more microphones, the threshold for the pitch detection is higher. This is because only such own voice is to be attenuated that is audible in the one or more microphones.

In a further implementation form of the voice detector according to the first aspect, for identifying the presence of the pitch in the VAC signal, the voice detector is configured to determine whether a pitch detected in at least one frame of the VAC signal is a male pitch or a female pitch.

In a further implementation form of the voice detector according to the first aspect, for identifying the presence of the pitch in the VAC signal, the voice detector is further configured to search for the determined male pitch in other frames of the VAC signal or search for the determined female pitch in other frames of the VAC signal.

This enhances the accuracy of detecting the voice of the user in the VAC signal, since periodical sounds outside the male or female frequency range can be excluded.

In a further implementation form of the voice detector according to the first aspect, for identifying the presence of the pitch in the VAC signal, the voice detector is further configured to compute one or more cepstral coefficients from the VAC signal, and compute the pitch from the one or more cepstral coefficients based on the first VAC threshold and on the second VAC threshold.

This provides a simple and reliable approach to detecting pitch in the VA signal, which has a high chance of being correlated with a voice.

In a further implementation form of the voice detector according to the first aspect, the one or more cepstral coefficients are computed according to the formula:

$$c = \mathrm{IFFT}(\mathrm{abs}(\mathrm{FFT}(x))^2),$$

wherein x refers to the VAC signal, FFT refers to a fast Fourier transform, and IFFT refers to an inverse FFT.

This provides the advantage that the voice detector can compute the cepstral coefficients in a computationally efficient way.

In a further implementation form of the voice detector according to the first aspect, for identifying the presence of the pitch in the VAC signal, the voice detector is further configured to determine a maximum cepstral coefficient corresponding to a certain frequency range,

identify that the pitch is present in the VAC signal, if the maximum cepstral coefficient divided by the signal power is larger than the first VAC threshold.

According to a second aspect, the disclosure relates to a hearing device comprising a voice detector according to the first aspect and one of the implementation forms thereof, and a noise suppressor configured to produce one or more modified microphone signals by selectively applying a gain to a speech signal in the one or more microphone signals, wherein the speech signal corresponds to the user own voice signal in the VAC signal detected by the voice detector.

This provides the advantage that noise, e.g. background noise can be suppressed, or the microphone signals can be boosted, while the speech signal can remain unaffected. Of course, it is also possible to relatively increase or decrease the loudness of the speech signal compared to background noise or environmental noise in the microphone signals. Moreover, the hearing device can computationally be efficient.

According to a third aspect, the disclosure relates to a system comprising a first hearing device according to the second aspect and one of the implementation forms thereof, wherein the first hearing device comprises a first voice detector according to the first aspect and one of the implementation forms thereof configured to obtain one or more first microphone signals, and comprises a first noise suppressor, a second hearing device according to the second aspect and one of the implementation forms thereof, wherein the second hearing device comprises a second voice according to the first aspect and one of the implementation forms thereof configured to obtain one or more second microphone signals, and comprises a second noise suppressor; wherein the first noise suppressor and the second noise suppressor are configured to cooperate to process the one or more first microphone signals and the one or more second microphone signals, in order to obtain a merged microphone signal, and produce a modified merged microphone signal by selectively applying a gain to a speech signal in the merged microphone signal.

For instance, the first hearing device may be for one ear of the user, and the second hearing device may be for the other ear of the user. In this case, the system of the third aspect can ensure the best hearing experience for the user.

In an embodiment, the first noise suppressor and the second noise suppressor are configured to form a single noise suppressor.

Advantageously, the system can amplify or reduce environmental sounds, but keep the own voice of the user at its original level (or close), by means of the noise suppressors that are configured to attenuate, e.g., a low level hum.

According to a fourth aspect, the disclosure relates to a method for voice detection, the method comprising obtaining one or more microphone signals, obtaining a voice accelerometer, VAC, signal, identifying the presence of a pitch in the VAC signal with a sensitivity by using a signal power of the one or more microphone signals and, if a pitch is detected in the VAC signal, determining whether the pitch is associated with a user own voice signal.

The method of the fourth aspect achieves the same advantages as the voice detector of the first aspect, and may be extended by respective implementation forms as described above for the voice detector of the first aspect.

According to a fifth aspect, the disclosure relates to a computer program comprising a program code for performing the method according to the fourth aspect or any implementation form thereof, when executed on a computer.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present invention will be explained in the following description of specific embodiments in relation to the enclosed drawings, in which:

FIG. 1     shows a schematic representation of a voice detector according to an embodiment of the invention;

FIG. 2     shows a pitch of a male voice according to an embodiment of the invention;

FIG. 3     shows a pitch of a female voice according to an embodiment of the invention;

FIG. 4     shows a schematic representation of a hearing device comprising a voice detector according to an embodiment of the invention;

FIG. 5     shows a signal processed by a hearing device comprising a voice detector according to an embodiment of the invention;

FIG. 6 shows a schematic representation of a hearing device comprising a voice detector according to an embodiment of the invention;

FIG. 7 shows a schematic representation of a system comprising a voice detector for a hearing device according to an embodiment of the invention; and

FIG. 8 shows a schematic representation of a method for voice detection according to an embodiment of the invention.

DETAILED DESCRIPTION OF EMBODIMENTS

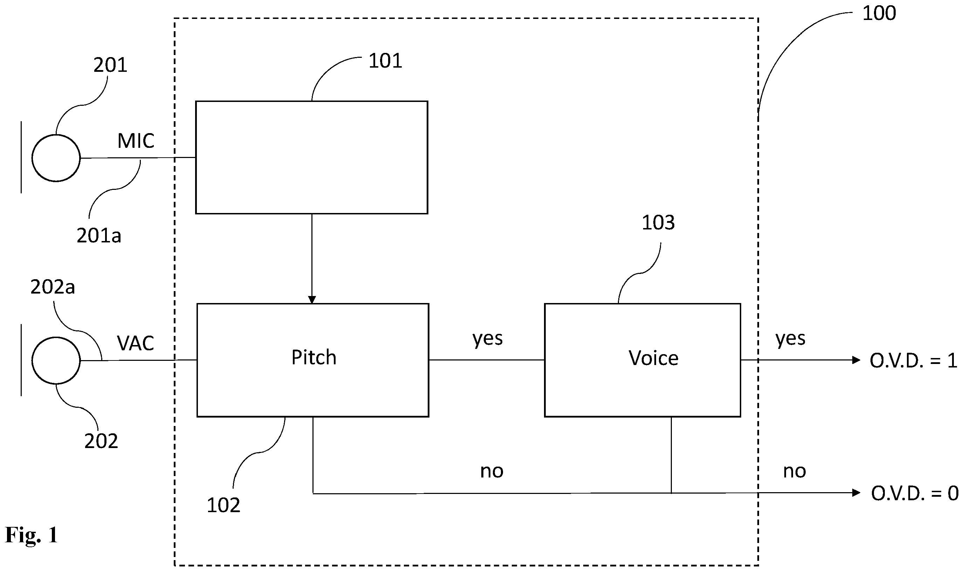

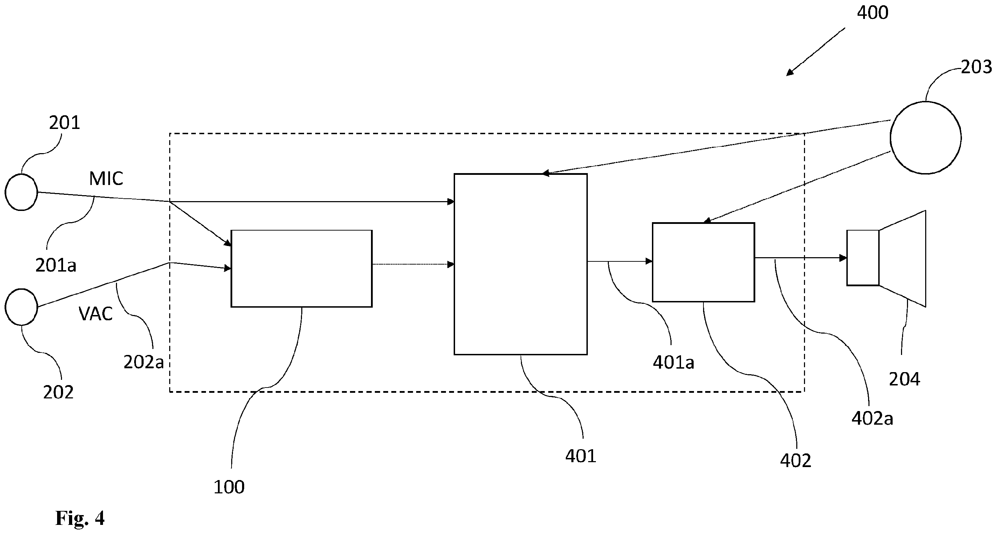

FIG. 1 shows a schematic representation of a voice detector 100 according to an embodiment of the invention. The voice detector 100 is for a hearing device 400 (see FIG. 4), and may particularly be part of the hearing device 400. In some embodiments, the voice detector 100 may be a supplemental device connected to the hearing device 400.

The voice detector 100 is configured to obtain one or more microphone signals 201a from one or more microphones 201. The one or more microphones 201 may be part of the hearing device 400. In particular, each microphone 201 may provide one microphone signal 201a to the voice detector 100.

Further, the voice detector 100 is configured to obtain a VAC signal 202a from a VAC 202. The VAC 202 may be a part of the hearing device 400.

Further, the voice detector 100 is configured to identify the presence of a pitch in the VAC signal 202a based on the one or more microphone signals (indicated by unit 101). That is, the voice detector 100 may derive information from the one or more microphone signals 201a that can be used in the pitch detection (in unit 102). For instance, as described below, depending on a signal power of the one or more microphone signals 201a, the detection of the pitch in the VAC signal 202a may be performed with different sensitivity.

In particular, the voice detector 100 may be configured to determine a first VAC threshold based on the one or more microphone signals 201a (in unit 101), e.g., based on the signal power of the one or more microphone signals 201a, and identify the presence of the pitch in the VAC signal 202a based on the first VAC threshold, wherein the first VAC threshold may be different for different detected signal powers of the one or more microphone signals 201a. As shown in Fig. 1, the voice detector 100 may specifically be configured to determine the first VAC threshold based on comparing a signal power of a current frame of the one or more microphone signals 201a with an average signal power of multiple frames of the one or more microphone signals 201a (in unit 101, which receives the one or more microphone signals 201a as input from the one or more microphones 201).

If the presence of a pitch is identified in the VAC signal 202a, the voice detector 100 is further configured to determine whether the pitch is associated with a voice signal. In particular, the voice detector 100 may be configured to determine, whether the pitch is associated with the voice signal, based on a second VAC threshold (in unit 103). For instance, the voice detector 100 may only determine an association of the pitch with a voice signal if a signal power of the VAC signal 202a is above the second VAC threshold, and to determine that the pitch is associated with the voice signal if additionally a frequency of the pitch is within a predefined frequency range.

The own voice of the user can thus be detected using the VAC signal 202a, which is typically generated inside ear of the user, and also using the one or more microphone signals 201a, which are typically generated outside of the ear of the user. A typical VAC 202 can be configured to pick up vowels in the own voice of the user, but it may also pick up other sounds caused by movement (e.g., chewing). Moreover, typical implementations (e.g., vision processing unit, VPU) of VACs 202 can be quite sensitive to interferences.

Therefore, the pitch in and signal power of the VAC signal 202a, and the signal power of the one or more microphone signals 201a, may beneficially be used by the voice detector 100, in order to more reliably detect the own voice of the user. Embodiments of the invention accordingly allow for very precise own voice detection of the user, and further for distinguishing it from other sounds in the mouth of the user.

As mentioned above, in addition to the pitch, the respective signal powers may play a role in the own voice detection performed by the voice detector 100. For example, the first VAC threshold may be modified based on microphone signal presence. In practice, this may be monitored by computing the average signal power over multiple frames of the one or more microphone signals 201a (in unit 101), and comparing the signal power in a current frame of the one or more microphone signals 201 with the average signal power. If there is a signal present in the one or more microphone signals 201 (i.e. the current signal power is above the average signal power), the first VAC threshold for pitch detection may be lower, and if there is no signal present in the one or more microphone signals 201 (i.e. the current signal power is not above the average signal power), the first VAC threshold may be higher. This is because the own voice should in the further processing be attenuated only if it is audible in the one or more microphones 201. In other words, this advantageously lowers the possibility for a false voice detection.

Secondly, if the signal power of the VAC signal 202a is low, there is probably no own voice present. This may be similarly monitored as a speech signal presence in the one or more microphone signals 201. It is worth noticing that, if there is a speech signal present in the one or more microphones 201 but not in the VAC 202, the one or more microphone signals 201a may be the target signal that should be boosted. Moreover, there can be periodical interferences in the VAC 202. However, these can be excluded, because their power is constant, although the pitch detection can mark them as speech. In particular, if the VAC signal 202a (which is input into unit 103) is above the second VAC threshold, then the result of the own voice detection (OVD) is positive (O.V.D.=1), otherwise it is not positive (O.V.D.=0).

Further, the voice detector 100 can be configured to compute the pitch from cepstral coefficients c that reveal periodicity and harmonics via the formula:

$$\underline{c} = \text{IFFT}(\text{abs}(\text{FFT}(\underline{x}))^2),$$

wherein x, refers to a 30 ms frame of speech or voice signal, namely a VAC signal, and IFFT and FFT refer to inverse fast Fourier transform and fast Fourier transform of the signal $\underline{x}$.

The pitch may further be computed in a lowered sampling rate (e.g., 2 kHz), and only when the signal power of the VAC signal is high enough (i.e., when it is above the first VAC threshold), in order to have moderate complexity.

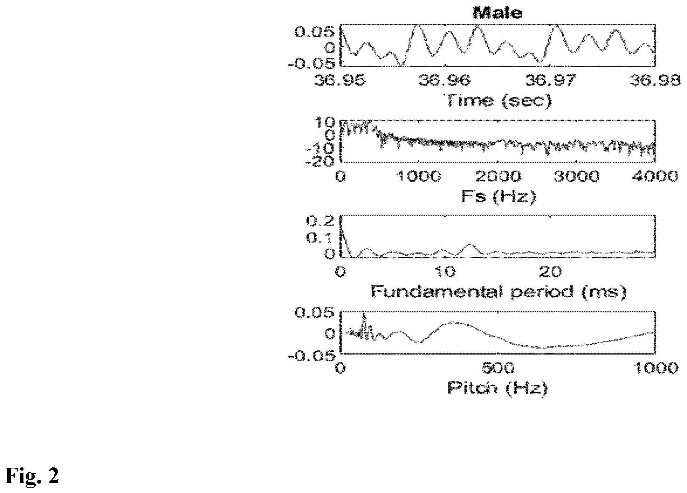

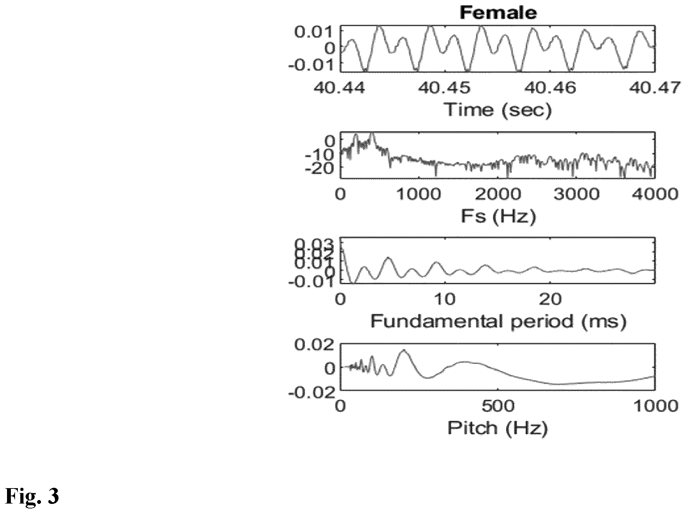

The computation of the cepstral coefficients is illustrated in Fig. 2 and Fig. 3 for a male and a female speech, respectively. Finally, the maximum cepstral coefficient, if it lies in the frequency range of [65 Hz, 320 Hz], is divided by the signal power c(0) (the first element of vector c that corresponds to log(0) or infinite pitch), and is compared to the first VAC threshold. Very low pitch (i.e., frequencies below 65 Hz) is considered as chewing or other non-speech activity inside the mouth of the user.

In an embodiment, since hearables are for personal use and the pitch for a male user is relatively low, and for a female speaker is relative high, there are two counters in the voice detector 100 that count percentages of frames of the VAC signal 202a, in which there is a clear pitch, in order to decide if the pitch is a male or female pitch. Once the decision is made, either the female pitch or the male pitch is only searched for further. That is, if a female pitch is determined, it may be searched for further only in the frequency range of [120 Hz, 320 Hz], for example. Alternatively, if a male pitch is determined, it may be searched for further only in the frequency range of [65 Hz, 160 Hz], for example. In speech, the pitch is usually not constant, but varies. In tonal languages, such as Chinese, words have different meanings depending on how the pitch changes during a vowel and, e.g., in English, the pitch rises in case of a question. In Finnish, for example, the speech pitch usually goes monotonously down.

FIG. 4 shows a schematic representation of a hearing device 400 comprising the voice detector 100 according to an embodiment, e.g. as shown in FIG. 1.

The hearing device 400 thus comprises the voice detector 100, and further comprises a noise suppressor 401, which is configured to produce one or more modified microphone signals 401a by selectively applying a gain to a speech signal present in the one or more microphone signals 201. The speech signal corresponds to the voice signal in the VAC signal 202a detected by the voice detector 100. That is, only if the voice detector 100 detects a voice signal in the VAC signal 202a, and thus implicitly a speech signal in the one or more microphone signals 201, does the noise suppressor 401 selectively apply the gain to that speech signal.

The noise suppressor 401 can further be configured to produce the one or more modified microphone signals 401a by suppressing a background noise signal in the one or more microphone signals 201a.

The hearing device 400 can further comprise a booster 402 configured to apply a boost to the one or more modified microphone signals, in particular a boost determined on the basis of a user input. That is, by means of the booster 402, the user can control an overall signal power output by the hearing device 400, i.e., the user can adjust a loudness.

Advantageously, the hearing device 400 can thus amplify or reduce environmental sounds, but keep the own voice of the user in the original level by means of the noise suppressor 401 that is configured to attenuate the low level hum.

In fact, in natural environments, there is always some low level hum (distant traffic, air conditioning, machines, oven, refrigerator, computers, etc.) present. The user usually does not pay any attention to them. However, when such noise is reproduced in natural hearthrough, it is similar but not exactly the same as in case when one is not wearing hearables at all. Thus, it is considered disturbing and the noise suppressor 401 can be configured to attenuate this hum.

In one embodiment, the booster 402 is operated manually by the user through a user interface UI 203. The user interface 203 may be of the hearing device 400 or may be in connection or communication with the hearing device 400. Similarly as the user can adjust the playback volume in hearables, the user can also adjust the level of the environmental noise. At the same time, the hearing device 400 can be configured to keep the own voice of the user in the original level and push low level background noise in predefined level that makes it practically inaudible.

This can be achieved by modifying the noise suppressors 401. In one embodiment, the noise suppressor 401 is operated manually by the user through a user interface UI 203.

In particular, the desired boost can be given from the user interface UI 203. For instance, if the boost is zero (0 dB), the signal power is not changed and the own voice control or boost is not needed. In the case of negative boost, the signal is attenuated and, in the case of positive boost, its power is increased.

That means, for instance, that the gain is zero if no boost is applied, the gain is positive if a negative boost is applied, and the gain is negative if a positive boost is applied. After boosting, the boosted modified microphone signal 402a is given as input to a loudspeaker 204 to be reproduced to the user. The loudspeaker may be part of the hearing device 400 or connected to the hearing device (in which case the hearing device 400 may be an auxiliary device connectable to any sort of loudspeaker 204).

The own voice control can be implemented efficiently by means of the voice detector 100. Whenever the boost is changed, the noise suppressor 401 is retuned and the relevant gain parameters are reinitialized. This provides the advantage that it is computationally efficient, because most of the computation takes place in the initialization.

The voice signal can be the own voice of a user, which is typically louder than any other signal and, when amplified, it can become too loud. The user may also adapt her voice volume to how she hears her own voice and to the environment voice volume.

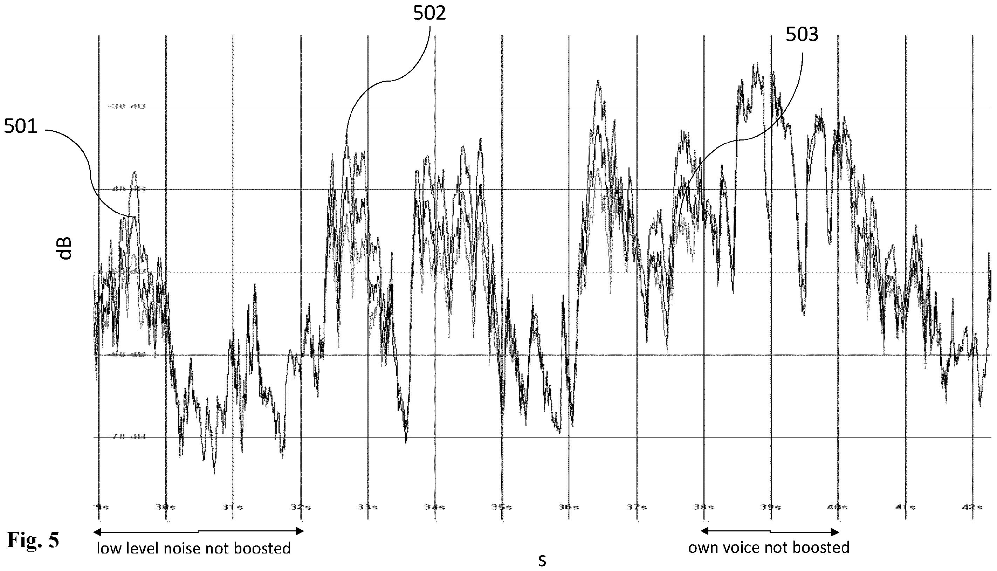

In order to better elucidate how the different sound signals are processed by the hearing device 400, in Fig. 5 the curve 501 represents the original signal as detected by the voice detector 100, while the curves 502 and 503 represent the signals boosted by ±6 dB by the booster 402. In Fig. 5, the low level noise is not boosted (20-32 sec) and own voice of the user in not boosted (38-40 sec). Notably, FIG. 5 shows the curve values (in dB, on the y-axis) over time (in seconds, on the x-axis).

Overall, the advantage is provided, that the user hears her voice naturally in original level and low level noise is not amplified, although everything else is either attenuated or made louder.

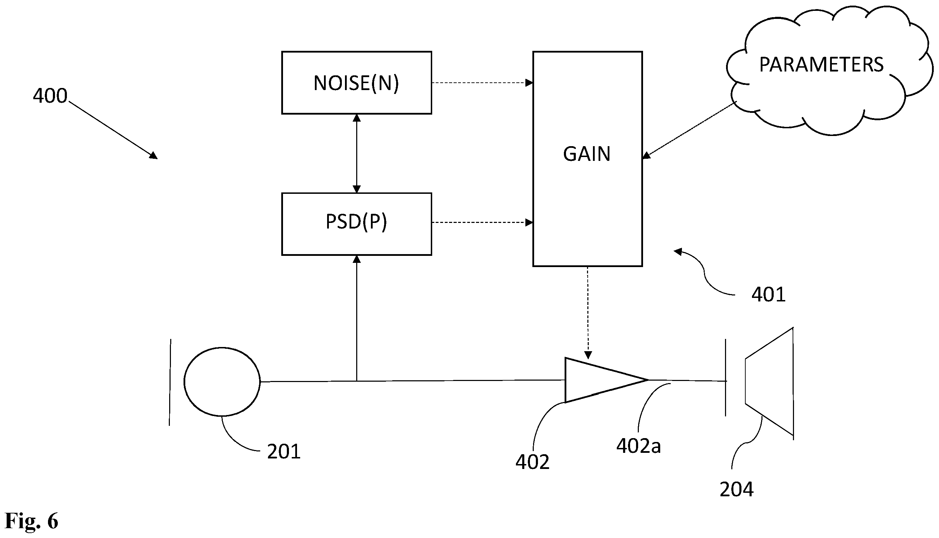

FIG. 6 shows a schematic representation of the hearing device 400 according to an embodiment, in particular of noise suppressor 401 and booster 402.

In this embodiment of the hearing device 400, the microphone signal $\underline{x}$ is processed by the noise suppressor 401 e.g., in 10 ms frames. The noise suppressor 401 can be configured to transfer each frame to frequency domain via FFT, multiplied by a gain $G(t, \omega)$ and transferred back via inverse FFT. The gain $G(t, \omega)$ depends on power spectral density (PSD) $P(t, \omega)$, computed by the noise suppressor 401 from the FFT of the said frame, a noise $N(t, \omega)$ at a time $t$ and a frequency $\omega$.

Ideally $G(t, \omega) = 1$, for pure speech, $G(t, \omega) = 0$, for pure noise and it is in-between for a noisy speech, depending on the estimated speech and noise levels. In practice, the gain is limited below and, in an embodiment, it is 0.25. In decibels, this corresponds to 0 dB attenuation for speech and -12 dB attenuation of pure noise, wherein the maximum attenuation parameter or noise suppressor parameter $m$ is, in this case, 12 dB.

The noise suppressor 401 parameter $m$ may be modified if the voice signal is boosted. In case of a positive boost x dB, the gain is limited below by -(x + m) dB, in case of a negative boost - x dB (x < m), the gain is limited below by (x - m) dB, otherwise the hearing device 400 can be configured to switch off the noise reduction.

Finally, in an embodiemnt, when the own voice control flags the own voice activity, the hearing device 400 can be configured to further modify the noise suppressor 401 parameters. In case of positive boost x dB, the gain is limited above by $G_{ovd}(t, \omega) = \min(G(t, \omega), -x)$, so that the booster 402 can be configured to boost the noise suppressed signal back to the original level, wherein the noise is suppressed by $m$ dB. In case of negative boost, the hearing device 400 can be configured to modify the noise suppressor 401 parameters so that $G_{ovd}(t, \omega) = 10^{x/20}$ for speech and $G_{ovd}(t, \omega) = 10^{\max(x-m,0)/20}$ for noise.

The signal power of the one or more microphone signals 201a from the one or more microphones 201 may then be adjusted based on the gain parameter (in the booster 402), and the boosted modified microphone signal 402a may be given as an input to a loudspeaker 204.

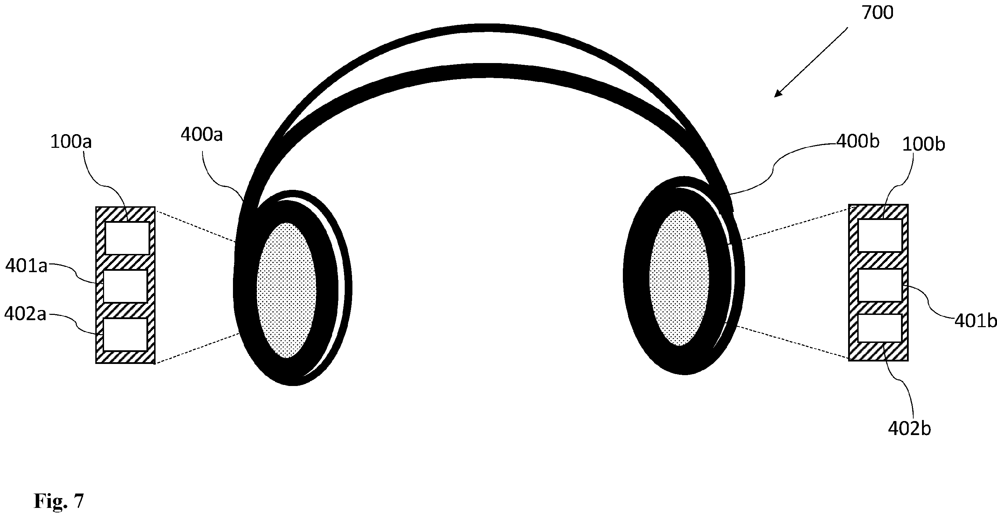

FIG. 7 shows a schematic representation of a system 700 according to an embodiment of the invention. The system 700 comprises a first hearing device 400a (e.g., for one ear of the user) and a second hearing device 400b (e.g., for another ear of the user), wherein the first and second hearing device 400a and 400b are illustrated to be connected mechanically. However, the hearing devices 400a and 400b can also be separate from another.

The first hearing device 400a comprises a first voice detector 100a, which is configured to obtain one or more first microphone signals 201a, and comprises a first noise suppressor 401a. The second hearing device 400b comprises a second voice detector 100b configured to obtain one or more second microphone signals 201, and comprises a second noise suppressor 401b. The functionality of the voice detectors 100a and 100b may be identical. The functionality of the voice detectors 100a and 100b may be as explained above in association with the voice detector 100.

Further, the first noise suppressor 401a and the second noise suppressor 401b are respectively configured to cooperate to process the one or more first microphone signals 201a and the one or more second microphone signals 201a, in order to obtain a merged microphone signal, and to produce a modified merged microphone signal 401a by selectively applying a gain to a speech signal in the merged microphone signal.

In an embodiment, the merged microphone signal is obtained by combining the one or more first microphone signals 201a with the one or more second microphone signals 201a, or is obtained by beamforming, or is obtained by selecting either the one or more first microphone signals 201a or the one or more second microphone signals 201a as the merged microphone signal based on which has higher signal quality (or power).

In an embodiment, the first noise suppressor

401a and the second noise suppressor 401b are configured to form a single noise suppressor 401.

In a yet another embodiment, the first hearing device 400a further comprises a first booster 402a, and the second hearing device 400b further comprises a second booster 402b, and the first booster 402a and the second booster 402b are configured to cooperate to apply a boost to the modified merged microphone signal 401a.

In an embodiment, the first booster 402a and the second booster 402b are configured to form a single booster 402.

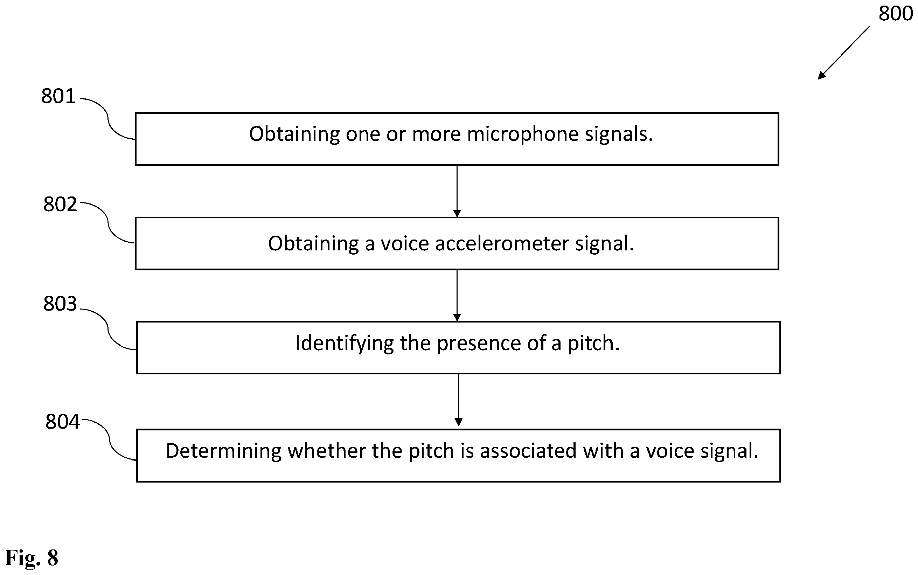

FIG. 8 shows a schematic representation of a method 800 for voice detection according to an embodiment. The method 800 may be performed by the voice detector 100 (see FIG. 1) or by each of the voice detectors 100a and 100b (FIG.7).

The method 800 comprises the following steps: a step 801 of obtaining one or more microphone signals 201a; a step 802 of obtaining a VAC signal 202a; a step 803 of identifying the presence of a pitch in the VAC signal 202a based on the one or more microphone signals 201a; and, if a pitch is detected in the VAC signal; and step 804 of determining whether the pitch is associated with a voice signal.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. A voice detector (100) for a hearing device (400), the voice detector (100) being configured to:

   obtain one or more microphone signals (201a);
   obtain a voice accelerometer, VAC, signal (202a);
   identify the presence of a pitch in the VAC signal (202a) with a different sensitivity depending on a signal power of the one or more microphone signals (202a); and,
   if the presence of a pitch is identified in the VAC signal (202a),
   determine whether the pitch is associated with a user own voice signal.

2. The voice detector (100) according to claim 1, further configured to:

   determine a first VAC threshold based on the one or more microphone signals (201a); and identify the presence of the pitch in the VAC signal (202a) based on the first VAC threshold.

3. The voice detector (100) according to claim 1 or 2, further configured to:
   determine whether the pitch is associated with the voice signal based on a determined second VAC threshold.

4. The voice detector (100) according to one of the claims 1 to 3, configured to:
   determine that the pitch is associated with the voice signal if additionally a frequency of the pitch is within a predefined frequency range.

5. The voice detector (100) according to one of the claims 2 to 4, wherein:
   the first VAC threshold is determined based on comparing a signal power of a current frame of one or more microphone signals with an average signal power of multiple frames of the one or more microphone signals.

6. The voice detector (100) according to claim 5, wherein:

   the first VAC threshold has a higher value if the signal power of the current frame of the one or more microphone signals is higher than the average signal power of the one or more microphone signals; and/or
   the first VAC threshold has a lower value if the signal power of the current frame of the one or more microphone signals is equal to or lower than the average signal power of the one or more microphone signals.

7. The voice detector (100) according to one of the claims 1 to 6, wherein for identifying the presence of the pitch in the VAC signal (202a), the voice detector (100) is configured to:
   determine whether a pitch detected in at least one frame of the VAC signal (202a) is a male pitch or a female pitch.

8. The voice detector (100) according to claim 7, wherein for identifying the presence of the pitch in the VAC signal (202a), the voice detector (100) is further configured to:

   search for the determined male pitch in other frames of the VAC signal (202a); or
   search for the determined female pitch in other frames of the VAC signal (202a).

9. The voice detector (100) according to one of the claims 1 to 8, wherein for identifying the presence of the pitch in the VAC signal, the voice detector (100) is further configured to:

compute one or more cepstral coefficients from the VAC signal (202a); and
compute the pitch from the one or more cepstral coefficients based on the first VAC threshold and on the second VAC threshold.

10. The voice detector (100) according to claim 9, wherein:

the one or more cepstral coefficients are computed according to the formula:

$$c=IFFT(abs(FFT(x))^2),$$

wherein x refers to the VAC signal, FFT refers to a fast Fourier transform, and IFFT refers to an inverse FFT.

11. The voice detector (100) according to claim 9 or 10 when depending on claim 2, wherein for identifying the presence of the pitch in the VAC signal (202a), the voice detector (100) is further configured to:

determine a maximum cepstral coefficient corresponding to a certain frequency range;
identify that the pitch is present in the VAC signal (202a) if the maximum cepstral coefficient divided by the signal power is larger than the first VAC threshold.

12. A hearing device (400) comprising:

a voice detector (100) according to one of the claims 1 to 11; and
a noise suppressor (401) configured to produce one or more modified microphone signals (401a) by selectively applying a gain to a speech signal in the one or more microphone signals (201a),
wherein the speech signal corresponds to the user own voice signal in the VAC signal (202a) detected by the voice detector (100).

13. A system (700) comprising:

a first hearing device (400a) according to claim 12, wherein the first hearing device (400a) comprises a first voice detector (100a) according to one of the claims 1 to 11 configured to obtain one or more first microphone signals (201a), and comprises a first noise suppressor (401a);
a second hearing device (400b) according to claim 12, wherein the second hearing device (400b) comprises a second voice detector (100b) according to one of the claims 1 to 11 configured to obtain one or more second microphone signals (201a), and comprises a second noise suppressor (401b); wherein
the first noise suppressor (401a) and the second noise suppressor (401b) are configured to cooperate to:

- process the one or more first microphone signals (201a) and the one or more second microphone signals (201a), in order to obtain a merged microphone signal; and
- produce a modified merged microphone signal (401a) by selectively applying a gain to a speech signal in the merged microphone signal.

14. A method (800) for voice detection, the method (800) comprising:

obtaining (801) one or more microphone signals (201a);
obtaining (802) a voice accelerometer, VAC, signal (202a);
identifying (803) the presence of a pitch in the VAC signal (201a) with a different sensitivity depending on a signal power of the one or more microphone signals (201a); and,
if a pitch is detected in the VAC signal (202a), determining (804) whether the pitch is associated with a user own voice signal.

15. A computer program comprising a program code for performing the method (800) according to claim 14 when executed on a computer.

**Patentansprüche**

1. Sprachdetektor (100) für eine Hörvorrichtung (400), wobei der Sprachdetektor (100) konfiguriert ist zum:

Erhalten eines oder mehrerer Mikrofonsignale (201a);
Erhalten eines Sprachbeschleunigungsmesser(VAC)-Signals (202a);
Identifizieren des Vorhandenseins einer Tonhöhe im VAC-Signal (202a) mit einer unterschiedlichen Empfindlichkeit, abhängig von einer Signalleistung des einen oder der mehreren Mikrofonsignale (202a); und
falls das Vorhandensein einer Tonhöhe im VAC-Signal (202a) identifiziert wird, Bestimmen, ob die Tonhöhe mit einem eigenen Sprachsignal eines Benutzers verknüpft ist.

2. Sprachdetektor (100) nach Anspruch 1, der ferner konfiguriert ist zum:

Bestimmen einer ersten VAC-Schwelle basierend auf dem einen oder den mehreren Mikrofonsignalen (201a); und
Identifizieren des Vorhandenseins der Tonhöhe im VAC-Signal (202a) basierend auf der ersten VAC-Schwelle.

3. Sprachdetektor (100) nach Anspruch 1 oder 2, der ferner konfiguriert ist zum:
Bestimmen, ob die Tonhöhe mit dem Sprachsignal verknüpft ist, basierend auf einer bestimmten zweiten VAC-Schwelle.

4. Sprachdetektor (100) nach einem der Ansprüche 1 bis 3, der konfiguriert ist zum:
Bestimmen, dass die Tonhöhe mit dem Sprachsignal verknüpft ist, falls zusätzlich eine Frequenz der Tonhöhe innerhalb eines vordefinierten Frequenzbereichs liegt.

5. Sprachdetektor (100) nach einem der Ansprüche 2 bis 4, wobei:
die erste VAC-Schwelle basierend auf einem Vergleichen einer Signalleistung eines aktuellen Rahmens eines oder mehrerer Mikrofonsignale mit einer durchschnittlichen Signalleistung mehrerer Rahmen des einen oder der mehreren Mikrofonsignale bestimmt wird.

6. Sprachdetektor (100) nach Anspruch 5, wobei:

die erste VAC-Schwelle einen höheren Wert aufweist, falls die Signalleistung des aktuellen Rahmens des einen oder der mehreren Mikrofonsignale höher als die durchschnittliche Signalleistung des einen oder der mehreren Mikrofonsignale ist; und/oder
die erste VAC-Schwelle einen niedrigeren Wert aufweist, falls die Signalleistung des aktuellen Rahmens des einen oder der mehreren Mikrofonsignale gleich oder niedriger als die durchschnittliche Signalleistung des einen oder der mehreren Mikrofonsignale ist.

7. Sprachdetektor (100) nach einem der Ansprüche 1 bis 6, wobei der Sprachdetektor (100) zum Identifizieren des Vorhandenseins der Tonhöhe im VAC-Signal (202a) konfiguriert ist zum:
Bestimmen, ob eine in mindestens einem Rahmen des VAC-Signals (202a) erkannte Tonhöhe eine männliche Tonhöhe oder eine weibliche Tonhöhe ist.

8. Sprachdetektor (100) nach Anspruch 7, wobei der Sprachdetektor (100) zum Identifizieren des Vorhandenseins der Tonhöhe im VAC-Signal (202a) ferner konfiguriert ist zum:

Suchen nach der bestimmten männlichen Tonhöhe in anderen Rahmen des VAC-Signals (202a); oder
Suchen nach der bestimmten weiblichen Tonhöhe in anderen Rahmen des VAC-Signals (202a).

9. Sprachdetektor (100) nach einem der Ansprüche 1 bis 8, wobei der Sprachdetektor (100) zum Identifizieren des Vorhandenseins der Tonhöhe im VAC-Signal ferner konfiguriert ist zum:

Berechnen eines oder mehrerer Cepstralkoeffizienten aus dem VAC-Signal (202a); und
Berechnen der Tonhöhe aus dem einen oder den mehreren Cepstralkoeffizienten basierend auf der ersten VAC-Schwelle und auf der zweiten VAC-Schwelle.

10. Sprachdetektor (100) nach Anspruch 9, wobei:

der eine oder die mehreren Cepstralkoeffizienten berechnet werden gemäß der Formel:

$$c = IFFT(abs(FFT(x))^2),$$

wobei x für das VAC-Signal steht, FFT für eine schnelle Fourier-Transformation steht und IFFT für eine inverse FFT steht.

11. Sprachdetektor (100) nach Anspruch 9 oder 10, wenn abhängig von Anspruch 2, wobei der Sprachdetektor (100) zum Identifizieren des Vorhandenseins der Tonhöhe im VAC-Signal (202a) ferner konfiguriert ist zum:

Bestimmen eines maximalen Cepstralkoeffizienten, der einem gewissen Frequenzbereich entspricht;
Identifizieren, dass die Tonhöhe im VAC-Signal (202a) vorhanden ist, falls der maximale Cepstralkoeffizient geteilt durch die Signalleistung größer als die erste VAC-Schwelle ist.

12. Hörvorrichtung (400), die umfasst:

einen Sprachdetektor (100) nach einem der Ansprüche 1 bis 11; und
einen Rauschunterdrücker (401), der konfiguriert ist, um ein oder mehrere modifizierte Mikrofonsignale (401a) durch selektives Anlegen einer Verstärkung auf ein Sprachsignal in dem einen oder den mehreren Mikrofonsignalen (201a) zu erzeugen,

wobei das Sprachsignal dem durch den Sprachdetektor (100) erkannten eigenen Sprachsignal des Benutzers im VAC-Signal (202a) entspricht.

13. System (700), das umfasst:

eine erste Hörvorrichtung (400a) nach Anspruch 12, wobei die erste Hörvorrichtung (400a) einen ersten Sprachdetektor (100a) nach einem der Ansprüche 1 bis 11 umfasst, der konfiguriert ist, um ein oder mehrere erste Mikrofonsignale (201a) zu erhalten, und einen ersten Rauschunterdrücker (401a) umfasst; eine zweite Hörvorrichtung (400b) nach Anspruch 12, wobei die zweite Hörvorrichtung (400b) einen zweiten Sprachdetektor (100b) nach einem der Ansprüche 1 bis 11 umfasst, der konfiguriert ist, um ein oder mehrere zweite Mikrofonsignale (201a) zu erhalten, und einen zweiten Rauschunterdrücker (401b) umfasst; wobei der erste Rauschunterdrücker (401a) und der zweite Rauschunterdrücker (401b) zum Zusammenarbeiten konfiguriert sind zum:

- Verarbeiten des einen oder der mehreren ersten Mikrofonsignale (201a) und des einen oder der mehreren zweiten Mikrofonsignale (201a), um ein zusammengeführtes Mikrofonsignal zu erhalten; und
- Erzeugen eines modifizierten zusammengeführten Mikrofonsignals (401a) durch selektives Anlegen einer Verstärkung an ein Sprachsignal im zusammengeführten Mikrofonsignal.

14. Verfahren (800) für eine Spracherkennung, wobei das Verfahren (800) umfasst:

Erhalten (801) eines oder mehrerer Mikrofonsignale (201a);
Erhalten (802) eines Sprachbeschleunigungsmesser(VAC)-Signals (202a);
Identifizieren (803) des Vorhandenseins einer Tonhöhe im VAC-Signal (201a) mit einer unterschiedlichen Empfindlichkeit, abhängig von einer Signalleistung des einen oder der mehreren Mikrofonsignale (201a); und
falls eine Tonhöhe im VAC-Signal (202a) erkannt wird, Bestimmen (804), ob die Tonhöhe mit einem eigenen Sprachsignal des Benutzers verknüpft ist.

15. Computerprogramm, das einen Programmcode zum Durchführen des Verfahrens (800) nach Anspruch 14 umfasst, wenn es auf einem Computer ausgeführt wird.

**Revendications**

1. Détecteur vocal (100) pour un dispositif auditif (400), le détecteur vocal (100) étant configuré pour :

obtenir un ou plusieurs signaux de microphone (201a) ;
obtenir un signal d'accéléromètre vocal, VAC (202a) ;
identifier la présence d'une tonie dans le signal VAC (202a) avec une sensibilité différente en fonction d'une puissance de signal du ou des signaux de microphone (202a) ; et,
si la présence d'une tonie est identifiée dans le signal VAC (202a),
déterminer si la tonie est associée à un signal vocal propre à l'utilisateur.

2. Détecteur vocal (100) selon la revendication 1, configuré en outre pour :

déterminer un premier seuil VAC sur la base du ou des signaux de microphone (201a) ; et identifier la présence de la tonie dans le signal VAC (202a) sur la base du premier seuil VAC.

3. Détecteur vocal (100) selon la revendication 1 ou 2, configuré en outre pour :
déterminer si la tonie est associée au signal vocal sur la base d'un second seuil VAC déterminé.

4. Détecteur vocal (100) selon l'une des revendications 1 à 3, configuré pour :
déterminer que la tonie est associée au signal vocal si, en outre, une fréquence de la tonie se situe dans une plage de fréquences prédéfinie.

5. Détecteur vocal (100) selon l'une des revendications 2 à 4, dans lequel :
le premier seuil VAC est déterminé sur la base de la comparaison d'une puissance de signal d'une trame actuelle d'un ou de plusieurs signaux de microphone avec une puissance moyenne de multiples trames du ou des signaux de microphone.

6. Détecteur vocal (100) selon la revendication 5, dans lequel :

le premier seuil VAC a une valeur plus élevée si la puissance de signal de la trame actuelle du ou des signaux de microphone est supérieure à la puissance moyenne de signal du ou des signaux de microphone ; et/ou
le premier seuil VAC a une valeur inférieure si la puissance de signal de la trame actuelle du ou des signaux de microphone est égale ou inférieure à la puissance moyenne de signal du ou des signaux de microphone.

7. Détecteur vocal (100) selon l'une des revendications 1 à 6, dans lequel, pour identifier la présence de la tonie dans le signal VAC (202a), le détecteur vocal (100) est configuré pour :
déterminer si une tonie détectée dans au moins une trame du signal VAC (202a) est une tonie masculine ou une tonie féminine.

8. Détecteur vocal (100) selon la revendication 7, dans lequel, pour identifier la présence de la tonie dans le signal VAC (202a), le détecteur vocal (100) est en outre configuré pour :

   rechercher la tonie masculine déterminée dans d'autres trames du signal VAC (202a) ; ou rechercher la tonie féminine déterminée dans d'autres trames du signal VAC (202a).

9. Détecteur vocal (100) selon l'une des revendications 1 à 8, dans lequel, pour identifier la présence de la tonie dans le signal VAC, le détecteur vocal (100) est en outre configuré pour :

   calculer un ou plusieurs coefficients cepstraux à partir du signal VAC (202a) ; et calculer la tonie à partir du ou des coefficients cepstraux sur la base du premier seuil VAC et du second seuil VAC.

10. Détecteur vocal (100) selon la revendication 9, dans lequel :

    le ou les coefficients cepstraux sont calculés selon la formule :

    $$c=IFFT(abs(FFT(x))^2),$$

    où x désigne le signal VAC, FFT désigne une transformée de Fourier rapide et IFFT désigne une FFT inverse.

11. Détecteur vocal (100) selon la revendication 9 ou 10 lorsqu'elle dépend de la revendication 2, dans lequel, pour identifier la présence de la tonie dans le signal VAC (202a), le détecteur vocal (100) est en outre configuré pour :

    déterminer un coefficient cepstral maximal correspondant à une certaine gamme de fréquences ;
    identifier que la tonie est présente dans le signal VAC (202a) si le coefficient cepstral maximal divisé par la puissance de signal est supérieur au premier seuil VAC.

12. Dispositif auditif (400), comprenant :

    un dispositif vocal (100) selon l'une des revendications 1 à 11 ; et
un suppresseur de bruit (401) configuré pour produire un ou plusieurs signaux de microphone modifiés (401a) en appliquant de manière sélective un gain à un signal de parole dans le ou les signaux de microphone (201a),
dans lequel le signal de parole correspond au signal vocal propre à l'utilisateur dans le signal VAC (202a) détecté par le détecteur vocal (100).

13. Système (700), comprenant :

    un premier dispositif auditif (400a) selon la revendication 12, dans lequel le premier dispositif auditif (400a) comprend un premier détecteur vocal (100a) selon l'une des revendications 1 à 11 configuré pour obtenir un ou plusieurs premiers signaux de microphone (201a), et comprend un premier suppresseur de bruit (401a) ;
    un second dispositif auditif (400b) selon la revendication 12, dans lequel le second dispositif auditif (400b) comprend un second détecteur vocal (100b) selon l'une des revendications 1 à 11, configuré pour obtenir un ou plusieurs seconds signaux de microphone (201a), et comprend un second suppresseur de bruit (401b) ; dans lequel le premier suppresseur de bruit (401a) et le second suppresseur de bruit (401b) sont configurés pour coopérer afin de :

    - traiter le ou les premiers signaux de microphone (201a) et le ou les seconds signaux de microphone (201a), afin d'obtenir un signal de microphone fusionné ; et
    - produire un signal de microphone fusionné modifié (401a) en appliquant de manière sélective un gain à un signal de parole dans le signal de microphone fusionné.

14. Procédé (800) destiné à la détection vocale, le procédé (800) comprenant :

    l'obtention (801) d'un ou plusieurs signaux de microphone (201a) ;
    l'obtention (802) d'un signal d'accéléromètre vocal, VAC (202a) ;
    l'identification (803) de la présence d'une tonie dans le signal VAC (201a) avec une sensibilité différente en fonction d'une puissance de signal du ou des signaux de microphone (201a) ; et, si une tonie est détectée dans le signal VAC (202a), le fait de déterminer (804) si la tonie est associée à un signal vocal propre à l'utilisateur.

15. Programme informatique comprenant un code de programme destiné à réaliser le procédé (800) selon la revendication 14 lorsqu'il est exécuté sur un ordinateur.

Fig. 1

Fig. 2

14

Fig. 3

15

Fig. 4

**Fig. 5**

501 502 503

dB

-30 dB
-40 dB
-60 dB
-70 dB

29s 30s 31s 32s 33s 34s 35s 36s 37s 38s 39s 40s 41s 42s

low level noise not boosted

own voice not boosted

s

EP 4 158 625 B1

17

Fig. 6

**Fig. 7**

EP 4 158 625 B1

EP 4 158 625 B1

800

801 — Obtaining one or more microphone signals.

802 — Obtaining a voice accelerometer signal.

803 — Identifying the presence of a pitch.

804 — Determining whether the pitch is associated with a voice signal.

Fig. 8

20

**EP 4 158 625 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140093091 A1
- US 20170263267 A1